Europäisches Patentamt

European Patent Office

Office européen des brevets

(11) Publication number: **0 419 208 A2**

# EUROPEAN PATENT APPLICATION

(21) Application number: 90310196.2

(22) Date of filing: 18.09.90

(51) Int. Cl.5: **F16F 1/18, B60G 11/12**

(30) Priority: **20.09.89 GB 8921249**

(43) Date of publication of application:
**27.03.91 Bulletin 91/13**

(84) Designated Contracting States:
**AT BE CH DE DK ES FR IT LI LU NL SE**

(71) Applicant: **GKN TECHNOLOGY LIMITED**
**Birmingham New Road**
**Wolverhampton West Midlands WV4**
**6BW(GB)**

(72) Inventor: **Spedding, Colin Edward**
**11 Lansdowne Avenue, Codsall**
**Wolverhampton, West Midlands WV8**
**2EN(GB)**
Inventor: **Harris, Leighton Richard**
**Spindlebank, Pinewood Road, Ashley Heath**
**Nr. Market Drayton, Shropshire(GB)**

(74) Representative: **Dodd, Graham Marshall et al**
**Guest Keen and Nettlefolds plc Group**
**Patents and Licensing Department P.O. Box**
**55 Ipsley House Ipsley Church Lane**
**Redditch Worcestershire B98 0TL(GB)**

(54) Leaf spring assemblies.

(57) A covering element (11) of plastics material at the end portion (10) of a leaf spring is moulded off the spring and shrink-fitted on to the spring to retain it thereon. Preferably the spring is of fibre-reinforced plastics material.

Fig.1

EP 0 419 208 A2

## LEAF SPRING ASSEMBLIES

This invention relates broadly to leaf springs, and more particularly to the provision at an end portion of a leaf spring of a covering element of a plastics material. The covering element affords a surface which may have sliding engagement with another leaf spring in a multi-leaf spring assembly, or, in a motor vehicle installation, have sliding engagement with an appropriate vehicle chassis part, and the covering element is provided in order to prevent wear of the leaf spring itself and/or to reduce frictional resistance to such sliding. Such a covering element is desirable to prevent wear of the leaf spring when the leaf spring is made of a composite (fibre-reinforced plastics) material, but the present invention is not applicable only to leaf springs made of such material.

The problem of providing a leaf spring with a covering element of plastics material is that of securing the covering element to the spring so that it does not become loose or detached therefrom in service. This is a particular problem in the case of a spring made of composite material, where drilling or otherwise operating on the spring to receive a mechanical fastening device is to be avoided because the consequent severing of fibres affects the properties of the spring.

Mechanical fixing methods have been proposed, for the securement of wear-resistant elements to composite leaf springs, e.g. in WO 87/06892 or WO 87/07226, but these involve a large number of components in addition to the wear-resistant elements themselves, and therefore are expensive and inconvenient. It has also been proposed, in GB 2 217 809A, not published at the priority date of the present application, that a wear-resistant covering can be provided on the end portion of a leaf spring by reaction injection moulding the covering in situ on the end portion. This provides a high degree of security of attachment of the covering, but necessitates the use of specialised equipment to apply the covering.

It is broadly the object of the present invention to provide an improved method of providing a covering element on the end portion of a leaf spring.

According to one aspect of the invention, we provide a leaf spring having an end portion provided with a covering element of a plastics material which has been shrink-fitted onto the spring end portion to retain it thereon.

It has been found that a plastics covering element, in the form of a sleeve having an aperture therethrough to receive the spring end portion, can be adequately secured to the spring by a shrink-fitting process. However, if security of retention of the coupling element is desired further to be improved, an adhesive may be used between the spring end portion and the covering element.

The spring end portion and covering element may have interfitting projection and recess formations, further to improve the security of the covering element. Such projection and recess formations may be so dimensioned that, prior to shrinkage of the covering element, the covering element has to be deformed slightly to enable it to be fitted over the end portion of the spring, the covering element returning to its original shape when it reaches the desired position and the formations engage with each other, i.e. there is a snap fit of the covering element on the spring end portion.

The covering element may be of a wear resistant thermoplastics material such as a polyamide material, e.g. "Nylon 66", and be manufactured by an injection moulding process. The covering element can then be fitted, whilst still hot from such injection moulding process, over the spring end portion. Contraction of the covering element as it cools then retains the covering element on the spring. The material of the covering element may be reinforced by relatively short fibres.

According to a further aspect of the invention, we provide a method of providing an end portion of a leaf spring with a covering element of a plastics material, comprising manufacturing the covering element off the spring and shrink-fitting the covering element onto the spring end portion.

The invention will now be described by way of example with reference to the accompanying drawings, in which:-

Figure 1 is a view of a spring in accordance with the invention;

Figures 2 to 4 are respectively top, side, and end views of the end portion and covering element of the spring of Figure 1, on an enlarged scale.

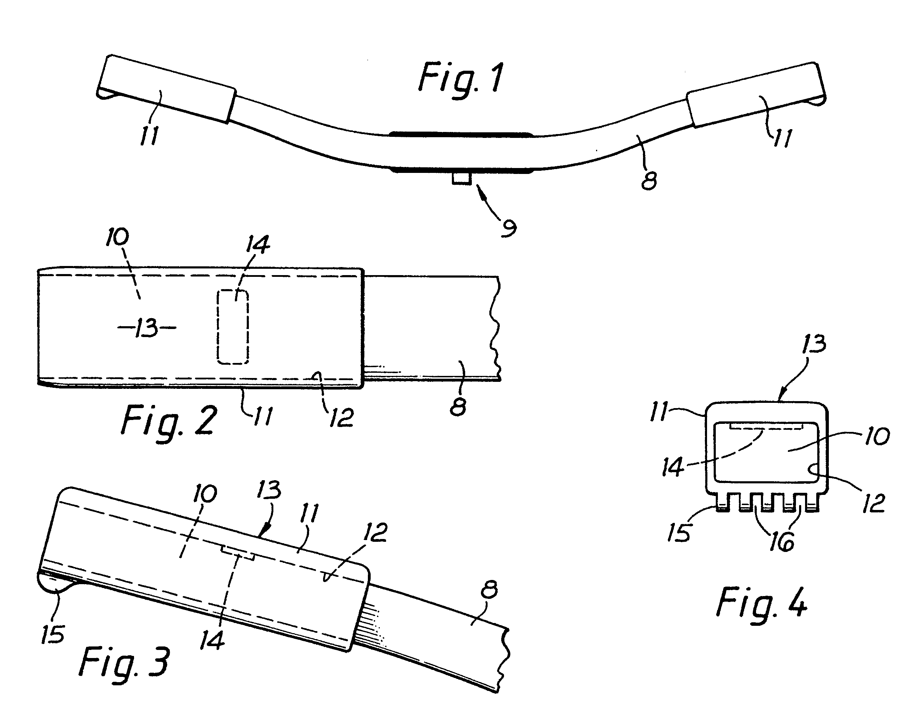

Referring firstly to Figure 1 of the drawings, this shows a leaf spring 8 made of composite, fibre-reinforced plastics, material. At its central region indicated at 9, the spring is adapted to be secured in a clamped assembly to, e.g. an axle or other suspension part of a motor vehicle, and may be provided with a locating element and adhesively secured elastomeric elements on its upper and lower surfaces, as illustrated.

Each of the opposite end portions 10 of the leaf spring is provided with a covering element in the form of a sleeve 11, with an aperture 12 extending longitudinally through the sleeve. The sleeve 11 presents an upper surface 13 which is intended for sliding engagement with another spring or a vehicle chassis part, which surface may be convexly curved in transverse cross-section so as to accommodate, during an initial "wearing in" process, any misalignment between the spring end portion 10 and the part with which it has sliding engagement.

The sleeves 11 are made of a plastics material, manufactured by an injection moulding process. A suitable material is a polyamide material (e.g. "Nylon 66") which preferably is reinforced with relatively short fibres of glass or aramid. The sleeves are assembled to the spring by fitting them longitudinally thereto while the sleeves are hot, and as they cool they contract so as to fit firmly on the spring end portions. The sleeves may be fitted while they are still hot from the injection moulding process by which they are manufactured, having been removed from the mould once they have cooled sufficiently to retain the required shape, or may be subsequently heated to a suitable fitting temperature which obviously must be below the temperature at which the sleeve material will melt.

Each sleeve has an internal projection 14, engaging a complementary recess in the surface of the spring end portion 10. The dimensions of the projection and recess are preferably such that, even before the sleeve has shrunk to fit tightly on the spring end portion, some deformation of the sleeve is necessary to fit it lengthwise over the spring end portion, until the projection snap fits into the recess. During such fitting, in the force required to be exerted to press the sleeve over the spring end portion can be measured and an increase in such force can be used as an indication that the projection has entered the reoess and thus that the sleeve is in the required position. When the sleeve has cooled and shrunk, its retention on the spring end portion is primarily by the frictional forces established therebetween. The interfitting projection and recess formations provide a final and additional degree of security. Such formations may be provided at the opposite surface of the spring to that illustrated.

At its end, sleeve 11 has a downwardly extending formation 15, for engagement, in use, with a vehicle chassis or suspension part to act as a constraint against spring movement. The formation 15 is divided by recesses 16 extending lengthwise of the spring into spaced walls, to avoid there being a large thickness of the material of the sleeve.

For additional security, an adhesive may be used between the sleeve and spring end portion, e.g. by applying it to the latter before the sleeve is pressed onto it. A further possibility is that a plastics material may be introduced, e.g. by a reaction injection moulding process, into any space or void which may exist between the spring and sleeve, subsequent to the above described shrink fitting of the sleeve.

## Claims

1. A leaf spring having an end portion (10) provided with a covering element (11) of a plastics material, characterised in that the covering element (11) has been shrink-fitted onto the spring end portion to retain it thereon.

2. A leaf spring according to Claim 1, further characterised in that the spring end portion (10) and the covering element (11) have interfitting projection and recess formations (14).

3. A leaf spring according to Claim 2, further characterised in that the covering element (11) is in the form of a sleeve having an aperture (12) therethrough wherein the spring end portion (10) is received, the sleeve having an internal projection (14) and the spring end portion having a recess wherein the projection is received.

4. A leaf spring according to Claim 3, further characterised in that said projection and recess formations are so dimensioned that, prior to shrinkage of the covering element, there is snap fit between the covering element and spring end portion.

5. A leaf spring according to any one of the preceding claims, further characterised in that the spring is of fibre reinforced plastics material.

6. A leaf spring according to any one of the preceding claims further comprising an adhesive between the spring end portion and the covering element.

7. A method of providing a leaf spring (8) with a covering element (11) of a plastics material on an end portion (10) thereof, comprising manufacturing the covering element (11) off the spring and shrink fitting the covering element onto the spring end portion (10).

8. A method according to Claim 7 comprising manufacturing the covering element (11) by an injection moulding process, and fitting it onto the spring end portion (10) whilst it is at a high temperature below the temperature at which the covering element material flows in the injection moulding process.

9. A method of providing an end portion (10) of a leaf spring with a covering element (11) of a plastics material, said covering element (11) being in the form of a sleeve having an aperture (12) therethrough and having an internal projection (14) engageable with a recess in the spring end portion, said method comprising providing the covering element at a high temperature, press fitting the covering element lengthwise onto the spring end portion, measuring the force required to be exerted to press the covering element over the spring end portion, and discontinuing such pressing when said measured force increases, indicative of engagement of said projection and recess formations.